**Europäisches Patentamt**

**European Patent Office**

**Office européen des brevets**

(11) Veröffentlichungsnummer: **0 027 920**
**A1**

(12) # EUROPÄISCHE PATENTANMELDUNG

(21) Anmeldenummer: **80105982.5**

(51) Int. Cl.³: **B 01 D 13/04**

(22) Anmeldetag: **03.10.80**

(30) Priorität: **05.10.79 DE 2940447**

(43) Veröffentlichungstag der Anmeldung: **06.05.81**
**Patentblatt 81/18**

(84) Benannte Vertragsstaaten: **AT BE CH DE FR GB IT LI LU NL SE**

(71) Anmelder: **Forschungsinstitut Berghof GmbH, Berghof, D-7400 Tübingen (DE)**

(72) Erfinder: **Strathmann, Heiner, Dr., Milanweg 15, D-7400 Tübingen (DE)**
Erfinder: **Zschocke, Peter, Dr., Albert-Schweitzer-Strasse 6, D-7406 Mössingen (DE)**

(74) Vertreter: **von Kreisler, Alek et al, Deichmannhaus am Hauptbahnhof, D-5000 Köln 1 (DE)**

(54) **Integralasymmetrische Ultrafiltrationsmembran.**

(57) Integralasymmetrische Ultrafiltrationsmembran aus Poly-(para-phenylenterephthalamid) in Folien-, Hohlfaser- oder Röhrenform, die nur in konzentrierter Schwefelsäure oder Oleum löslich ist.

EP 0 027 920 A1

Bei der Trennung von molekularen Gemischen durch Hyper- und Ultrafiltration werden heute praktisch ausschließlich Membranen mit einer
asymmetrischen Struktur verwendet. Dies sind Membranen, die auf der der
Rohlösung zugewandten Seite eine dünne, 0,2 - 2 μm dicke "Haut"
tragen, die die eigentliche Membran darstellt und von einer grob porösen, 100 - 200 μm starken Unterstruktur unterstützt wird. Hergestellt
werden asymmetrische Membranen nach einem von Loeb und Sourirajan
(Adv.Chem.Ser. 38, 117 (1963)) entwickelten, als Phaseninversion bezeichneten Verfahren. Dabei wird ein Polymer in einem geeigneten organischen
Lösungsmittel gelöst, als Film ausgezogen und in einem Nicht-Lösungsmittel gefällt:
Nach diesem Verfahren können asymmetrische Filtrationsmembranen aus
einer ganzen Reihe von Polymeren, wie z.B. Celluloseacetat, Polysulfon,
Polyamid usw., hergestellt werden (A.S. Michaels US Patent 3.615,024, 1971)
Alle diese Membranen haben den Nachteil, daß ihre Anwendung praktisch
auf wäßrige Medien begrenzt ist. Asymmetrische Membranen, die durch
Phaseninversion hergestellt werden, sind bedingt durch den Herstellungsprozeß, immer in eine Reihe von organischen Lösungsmitteln löslich und
daher für Anwendungen in nicht wäßrigen Medien ungeeignet.
Der Erfindung liegt die Aufgabe zugrunde, eine integralasymmetrische
Ultrafiltrationsmembran zu entwickeln, die möglichst unabhängig vom
jeweiligen - vor allem organischen - Lösungsmittel, d.h. möglichst universal, einsetzbar sein soll.

Diese Aufgabe wurde erfindungsgemäss dadurch gelöst, daß
durch die Auswahl einer nur in 1,4-Stellung verknüpften,
linearen, aromatischen Polyamids, dem Poly-(p-phenylen-
terephthalamid), ein Polymer gefunden wurde, das mit Ausnahme seines alleinigen Lösungsmittels, konzentrierte
Schwefelsäure oder Oleum, in keinem anderen Lösungsmittel
löslich oder nennenswert quell- oder schrumpfbar ist.

Gegenstand der Erfindung ist daher eine integral asymmetrische Ultrafiltrationsmembran aus Polymeren, die dadurch
gekennzeichnet ist, daß sie aus Poly-(p-phenylen-terephthalamid) besteht.

Die erfindungsgemässe Membran kann nach üblichen bekannten Verfahren hergestellt werden. Sie hat die übliche Form wie z.B. Folien-, Hohlfaser- oder Röhrenform.

Die erfindungsgemässe Membran ist außer in konzentrierter Schwefelsäure oder in Oleum in keinem anderen Lösungsmittel, vor allem in keinem organischen Lösungsmittel, löslich. Bei Einwirkung von Lösungsmitteln überschreitet eine Dimensionsänderung dieser Membran in einer Richtung 5 % nicht.

Durch die Erfindung ist es erstmals gelungen, Ultrafiltrationsmembranen für Trennprobleme in organischen Lösungsmitteln einzusetzen und eine grosse Lücke im industriellen Anwendungsbereich von Ultrafiltrationsmembranen zu schließen. Wie die Beispiele 3, 4 und 5 zeigen, gelingt die Abtrennung makromolekularer Teilchen mit Ultrafiltrationsmembranen aus Poly-(p-phenylen-terephtalamid) sowohl aus wäßrigen als auch aus nichtwäßrigen Lösungen, etwa aus Dimethylformamid. Filtratleistungen und Quellverhalten der neuen Ultrafiltrationsmembranen mit einem repräsentativen Querschnitt durch die verschiedenen Lösungsmittelarten wurden wie folgt ermittelt:

Beispiel 1

In einer gerührten Edelstahlzelle, Type GH 400 der Firma Forschungsinstitut Berghof GmbH, wurden durch Fällen in verdünnter Schwefelsäure erhaltene Membranen aus Poly-(p-phenylen-terephthalamid) nacheinander mit nachstehenden Lösungsmitteln getestet, wobei das jeweilige Solvens durch das nächstfolgende aus dem Porenvolumen der Membranen verdrängt wurde. Nach jeweils 50 ml Vorlauf wurden die Filtratleistungen bei 5 bar ermittelt:

| Lösungsmittel | Filtratleistung in Liter/Quadratmeter Membranfläche und Tag $(l/m^2 \cdot d)$ |
|---|---|
| $H_2O$ | 1980 |
| Äthanol | 2160 |
| Aceton | 13800 |
| Tetrahydrofuran | 7950 |
| 50 % wässr. Acetaldehyd | 2750 |
| Dimethylformamid | 4050 |
| Dioxan | 3110 |
| Dichlormethan | 3200 |
| Toluol | 7600 |
| Benzol | 7000 |
| Styrol | 5700 |
| n-Heptan | 1450 |

Beispiel 2

Membranen aus Poly-(p-phenylen-terephtalamid) mit einem Durchmesser von 18 mm wurden in den unter Beispiel 1 genannten Lösungsmitteln während 24 Stunden unter Rückfluß gekocht und danach die Änderungen der Durchmesser bestimmt, die in Tabelle 2 als % Schrumpfung angegeben sind:

| Lösungsmittel | Schrumpfung in % Längenänderung des Membrandurchmessers |
|---|---|
| $H_2O$ | 0 |
| Äthanol | 1,7 |
| Aceton | 2,8 |
| Tetrahydrofuran | 1,7 |
| Acetaldehyd[1] | 0 |
| Dimethylformamid | 3 |
| Dioxan | 3 |
| Dichlormethan | 2,8 |
| Toluol | 3 |

| | |
|---|---|
| Benzol | 3 |
| Styrol [1] | 0 |
| n-Heptan | 5 |

**Beispiel 3**

Membranen aus Poly-(p-phenylen-terephtalamid) wurden aus einer 2,76%-igen Lösung in 98% $H_2SO_4$ durch Fällen in 2 N $H_2SO_4$ bei 7° hergestellt und danach die molekulare Trenngrenze mit einer 0,05%-igen wäßrigen Cytochrom-C-Lösung (Molgewicht 12 400) in einer gerührten Ultrafiltrationszelle Type GN-10-400 der Forschungsinstitut Berghof GmbH bei 5 bar ermittelt.:

Es wurde eine Filtratleistung von 1380 $l/m^2$ . d und ein Rückhaltevermögen von 99 bis 99,9% für Cytochrom C gefunden.

**Beispiel 4**

Ausführung wie bei Beispiel 3 mit dem Unterschied, daß in 2 N $H_2SO_4$ bei 30° gefällt wurde.

Es wurde mit der Cytochrom-C-Lösung des Beispiels 3 eine Filtratleistung von 2250 $l/m^2$.d gefunden bei einem Rückhaltevermögen für Cytochrom C von 80%. Danach wurde mit einer 0,1%-igen wäßrigen Albuminlösung (MG 64 000) getestet und bei einer Filtratleistung von 1000 $l/m^2$.d ein Rückhaltevermögen für Albumin von 99,9% gemessen.

---

[1] Lagerung in diesen Lösungsmitteln während 24 Stunden bei Raumtemperatur.

0027920

Beispiel 5

Membranen aus Poly-(p-phenylen-terephthalamid) der molekularen Trenngrenze 12000, auf Tyvec-Papier kaschiert, wurden während 24 Stunden
mit 10- und 30%-igem wäßrigem Glycerin konditioniert, danach während
24 Stunden luftgetrocknet und anschließend Ultrafiltrationsversuche mit
0,1% eines substituierten Polystyrols des Molgewichts 34000 in Dimethylformamid ausgeführt, wie bei Beispiel 1 beschrieben.
Bei 5 bar wurde in beiden Fällen eine Filtratleistung von 2500 $1/m^2.d$
und ein Rückhaltevermögen für das Polystyrol von 97% gefunden.

Beispiel 6

Mit einer Naßspinndüse (Entwicklung der Forschungsinstitut Berghof GmbH)
wurden aus einer Lösung von 2,76% Poly-(p-phenylen-terephthalamid) in
99,6% $H_2SO_4$ durch Fällen mit Wasser bei 1 - $5^{\circ}C$ asymmetrische Kapillarmembranen erhalten mit einem Innendurchmesser von 800 ju, und einer
Wandstärke von 180 ju. Sie wurden gebündelt, mit Epoxidharz in ein Plexiglasrohr eingeklebt und mit dem Kapillar-Membran-Testgerät Type BKT-1
der Forschungsinstitut Berghof GmbH bei 0,5 und 5 bar getestet mit folgenden Ergebnissen:

| Filtrations-lösung | Molekulargewicht des Inhaltsstoffes (Dalton) | Filtrat leistung bei 0,5 bar $(1/m^2.d)$ | Filtratleistung bei 5 bar $(1/m^2.d)$ | Rückhaltever mögen in % |
|---|---|---|---|---|
| 0,05% Cyto-chrom C in Wasser | 12 400 | 500 | 4 500 | 99,9 |
| 0,01% Baci-tracin in Wasser | 1 400 | 410 | 4 000 | 65 |

Die Kapillaren widerstanden selbsttragend einem hydrostatischen Filtrationsdruck von mehr als 7 bar.

Patentansprüche
-------------------------------------

1.    Integralasymmetrische Ultrafiltrationsmembran
aus Polymeren, dadurch gekennzeichnet, daß die Membran
aus Poly-(para-phenylen-terephthalamid) besteht.

2.    Membran nach Anspruch 1, dadurch gekennzeichnet,
daß sie in Folien-, Hohlfaser- oder Röhrenform vorliegt.

3.    Membran nach Ansprüchen 1 und 2, dadurch gekennzeichnet, daß sie nur in konzentrierter Schwefelsäure oder
in Oleum löslich ist.

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | DE - A - 2 425 563 (TORAY INDUSTRIES) <br> * Seite 7, Formel (IV); Seite 11, Absatz 5; Seite 12, Formel (XI); Seite 15, Absatz 1 * <br> -- | 1 |
| X | AU - B - 473 950 (US DEPARTMENT OF IN-TERIOR) <br> * Seiten 4, 5 * <br> -- | 1 |
| X | CHEMIKER-ZEITUNG, Band 103, Nr. 6, 1979 <br> H. STRATHMANN "Struktur und Funktion von Kunststoffmembranen". <br> Seiten 211 bis 219 <br> * Fig. 10 * <br> -- | 1 |
| | DE - A1 - 2 605 531 (AKZO) <br> * Seite 9, Absatz 2 * <br> -- | 1-3 |
| | DE - A1 - 2 627 141 (RHONE-POULENC-TEXTI-LE) <br> * Seite 10, Absatz 5 bis Seite 11, Absatz 1 * <br> -- | 3 |
| | DE - A1 - 2 632 416 (L.B. SOKOLOV et al.) <br> * Seite 14, Absatz 2 * <br> -- | 3 |
| | DE - A1 - 2 726 178 (TEIJIN LTD.) <br> * Seite 6, Absatz 2; Seite 7, Absatz 2 * <br> ---- | 1-3 |

**KLASSIFIKATION DER ANMELDUNG (Int. Cl.³)**

B 01 D 13/04

**RECHERCHIERTE SACHGEBIETE (Int. Cl.³)**

B 01 D 13/00
B 01 D 13/04
C 08 G 69/32
C 08 J 5/18

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patent-familie, übereinstimmendes Dokument

X

Der vorliegende Recherchenbericht wurde für alle Patentansprüche erstellt.

| Recherchenort | Abschlußdatum der Recherche | Prüfer |
|---|---|---|
| Berlin | 30-01-1981 | KÜHN |

EPA form 1503.1 06.78